# EUROPÄISCHE PATENTSCHRIFT

(11) **EP 2 684 678 B1**
(45) Veröffentlichungstag und Bekanntmachung des Hinweises auf die Patenterteilung: **26.04.2017**
(21) Anmeldenummer: 13167753.6
(22) Anmeldetag: 15.05.2013
(51) Int. Cl.: B29C 65/08, B29C 65/74

(54) **Vorrichtung und Verfahren zum Ultraschallfügen und -trennen**
Apparatus and method for ultrasound joining and separating
Dispositif et procédé d'assemblage et de séparation par ultrasons

(30) Priorität: 09.07.2012 DE 102012211895
(43) Veröffentlichungstag der Anmeldung: 15.01.2014
(73) Patentinhaber: ROBERT BOSCH GMBH, 70442 Stuttgart (DE)
(72) Erfinder: Wieduwilt, Ulrich, 73529 Schwaebisch Gmuend (DE); Lulay, Christoph, 8406 Winterthur (CH); Bach, Sascha, 01257 Dresden (DE)

(56) Entgegenhaltungen:
- EP-A2- 1 849 569
- GB-A- 2 017 041
- JP-A- 2010 131 847
- US-A- 3 823 055
- US-A- 4 313 778
- US-A- 4 410 383

## Beschreibung

### Stand der Technik

Die vorliegende Erfindung betrifft eine Vorrichtung zum Ultraschallfügen und - trennen von siegelbarem Material, insbesondere von Verpackungsmaterialien. Des Weiteren betrifft vorliegende Erfindung ein Verfahren zum Fügen und Trennen des siegelbaren Materials.

Siegelbare Materialien sind beispielsweise Folien oder folienartige Materialien. Insbesondere werden Verpackungsbeutel zur Aufnahme von flüssigen oder festen Gütern, die durch den Einsatz von Schlauchbeutelmaschinen hergestellt werden, versiegelt. Dabei werden zumindest zwei aufeinanderliegende Schichten des siegelbaren Materials miteinander verbunden. Die Trennung erfolgt während oder nach der Versiegelung in etwa mittig der Versiegelung. Die bereits bekannten Vorrichtungen und Verfahren benötigen einen hohen technischen Aufwand, da die Füge- (auch: Siegel-) und Trennwerkzeuge getrennte Funktionseinheiten darstellen und separat angesteuert werden. Üblicherweise wird mittels einer Sonotrode und einem Gegenwerkzeug (Amboss) die Versiegelung hergestellt. Unter einer separaten Schneidvorrichtung, beispielsweise Trenn- oder Schlagmesser, erfolgt die Trennung. Dabei kann die Schwingung der Sonotrode zum Trennen genutzt werden. Es bedarf jedoch stets eines entsprechenden, beispielsweise scharfkantigen, Gegenstücks zur letztendlichen Durchtrennung des Materials.

EP 1849569 A2 zeigt eine Vorrichtung gemäß dem Oberbegriff des Anspruchs 1.

Weiteren relevanten Stand der Technik zeigen die Druckschriften JP 2010131847 A, US 4313778 A und US 4410383 A.

### Offenbarung der Erfindung

Bei der erfindungsgemäßen Vorrichtung mit den Merkmalen des Anspruchs 1 sowie bei dem erfindungsgemäßen Verfahren mit den Merkmalen des Anspruchs 6 sind die Werkzeuge für den Füge- und Trennprozess identisch. Das Gegenwerkzeug wird durch die Zustellbewegung der Sonotrode definiert elastisch verformt bzw. bewegt. Durch die Bewegung des Gegenwerkzeugs entgegen der Rückstellkraft der elastischen Aufhängung stellt sich der entsprechende Fügedruck, und bei entsprechend größer Rückstellkraft auch der benötigte Druck zum Durchtrennen des Materials, ein. Insbesondere durch eine Überlagerung von longitudinaler und transversaler Schwingung, d.h. durch winkelversetzten Angriff der longitudinalen Schwingung, wird eine Scherbeanspruchung an der Füge- bzw. Trennzone erreicht. Der erfindungsgemäße kombinierte Füge- und Trennprozess erfordert keinen Energierichtungsgeber im üblichen Sinn, sondern nur eine Kontur an der Sonotrode. Diese muss jedoch nicht einmal scharfkantig sein. Auch ein kurzzeitiges Berühren von Sonotrode und Gegenwerkzeug, nach dem Durchtrennen des Materials, führt aufgrund der vergleichsweise geringen Masse des Gegenwerkzeugs und infolge des elastischen Schwingvermögens des Gegenwerkzeugs nicht zur Zerstörung des Schwinggebildes. Der notwendige Fügedruck ist vergleichsweise gering und wird über die Zustellbewegung der Sonotrode und über die Rückstellkraft der elastischen Aufhängung des Gegenwerkzeugs definiert. Es bedarf keiner exakten Spalteinstellung, z.B. in Form von vorbekannten, geschliffenen Anschlägen. All diese Vorteile werden erreicht durch eine Vorrichtung zum Ultraschallfügen und -trennen von siegelbarem Material, insbesondere von Verpackungsmaterial. Die Vorrichtung umfasst eine in Ultraschallschwingung versetzbare Sonotrode und ein entsprechendes Gegenwerkzeug. Mittels einer Bewegungsvorrichtung kann die Sonotrode verfahren werden. Das Gegenwerkzeug ist mittels einer elastischen Aufhängung beweglich angeordnet. Das Gegenwerkzeug kann, beispielsweise ausgestaltet als Blech, selbst elastisch sein, so dass die "elastische Aufhängung" integraler Bestandteil des Gegenwerkzeugs selbst ist. Zwischen der Sonotrode und dem Gegenwerkzeug ist das siegelbare Material sowohl zum Fügen bzw. Versiegeln als auch zum Durchtrennen angeordnet. Durch ein Verfahren der Sonotrode in Richtung des Gegenwerkzeugs wird das siegelbare Material auf das Gegenwerkzeug gedrückt. Gleichzeitig drückt die Sonotrode das Gegenwerkzeug entgegen einer Rückstellkraft der elastischen Aufhängung. Bei ausreichend großer Rückstellkraft kommt es nicht nur zur Versiegelung, sondern auch zum Durchtrennen.

Die Unteransprüche zeigen bevorzugte Weiterbildungen der Erfindung.

Um insbesondere auch das Durchtrennen des siegelbaren Materials zu erreichen, ist bevorzugt vorgesehen, dass die elastische Aufhängung so ausgebildet ist, dass bei dem Verfahren der Sonotrode das Gegenwerkzeug gegenüber einer Grundposition neigbar ist. Aufgrund dieser Neigung wird erreicht, dass die Ultraschallschwingung von der Sonotrode auf das siegelbare Material und auf das Gegenwerkzeug, gegenüber der Grundposition, winkelversetzt wirkt. So kommt es zur Überlagerung von longitudinaler und transversaler Schwingung und somit zu einer Scherbeanspruchung der versiegelten Zone. Diese Scherbeanspruchung führt letztendlich zur Durchtrennung. Des Weiteren kann die Fügefläche der Sonotrode in der Grundposition parallel zum Gegenwerkzeug stehen. Durch die fortschreitende Neigung des Gegenwerkzeugs wirkt dann eine Kante der Fügezone der Sonotrode auf das siegelbare Material, so dass eine effektive und definierte Durchtrennung möglich ist.

In bevorzugter Ausführung ist vorgesehen, dass das Gegenwerkzeug um zumindest 10° gegenüber der Grundposition, insbesondere einer horizontalen Position, neigbar ist.

Das Gegenwerkzeug ist bevorzugt relativ leicht ausgeführt und derart aufgehängt, dass es als von der Sonotrode anregbares, mitschwingendes Element ausgebildet ist. Das Gegenwerkzeug wird erfindungsgemäß als einseitig eingespannte, elastische Platte ausgebildet. Insbesondere ist das Gegenwerkzeug ein einseitig eingespanntes Blech. Durch diese einseitige Einspannung und die elastische Gestaltung der Platte ist die elastische Aufhängung integraler Bestandteil des Gegenwerkzeugs.

Das Gegenwerkzeug wird bevorzugt in einer Einspannvorrichtung eingespannt, wobei das Gegenwerkzeug an verschiedenen Positionen in der Einspannvorrichtung einspannbar ist, um die entsprechende Rückstellkraft zu verändern. Insbesondere ist das Gegenwerkzeug, ausgebildet als elastische Platte, stufenlos gegenüber der Einspannvorrichtung verstellbar.

Die Erfindung umfasst des Weiteren ein Verfahren zum Fügen und Trennen von siegelbarem Material. Die im Rahmen der erfindungsgemäßen Vorrichtung beschriebenen vorteilhaften Ausgestaltungen und die Unteransprüche finden entsprechend vorteilhafte Anwendung auf das erfindungsgemäße Verfahren. Das Verfahren umfasst die folgenden Schritte: (i) Einsetzen eines siegelbaren Materials zwischen eine Sonotrode und ein Gegenwerkzeug, (ii) Versetzen der Sonotrode in Ultraschallschwingung und (iii) Verfahren der Sonotrode in Richtung des Gegenwerkzeugs. Dabei wird durch das Verfahren der Sonotrode das Gegenwerkzeug gegen eine Rückstellkraft einer elastischen Aufhängung bewegt, insbesondere geneigt. Durch das Zustellen der Sonotrode auf das Gegenwerkzeug und durch die gleichzeitige Bewegung des Gegenwerkzeugs entgegen der Rückstellkraft steigt mit zunehmender Zustellung der Sonotrode die Rückstellkraft an. Gleichzeitig verändert sich der Winkel, mit dem die Sonotrode auf das Material und auf das Gegenwerkzeug wirkt. Dadurch wird zunächst ein Fügen und dann ein Trennen des Materials erzeugt.

Es bedarf erfindungsgemäß also keiner weiteren Vorrichtungen oder Elemente zum Trennen des Materials. Mit ein und denselben Werkzeugen wird sowohl das Versiegeln bzw. Fügen als auch das Trennen erreicht.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematische Ansicht einer erfindungsgemäßen Vorrichtung gemäß einem ersten Ausführungsbeispiel,
- Figur 2: eine weitere, schematische Ansicht der erfindungsgemäßen Vorrichtung gemäß dem ersten Ausführungsbeispiel, und
- Figur 3: eine schematische Ansicht der erfindungsgemäßen Vorrichtung gemäß einem zweiten Ausführungsbeispiel.

### Ausführungsformen der Erfindung

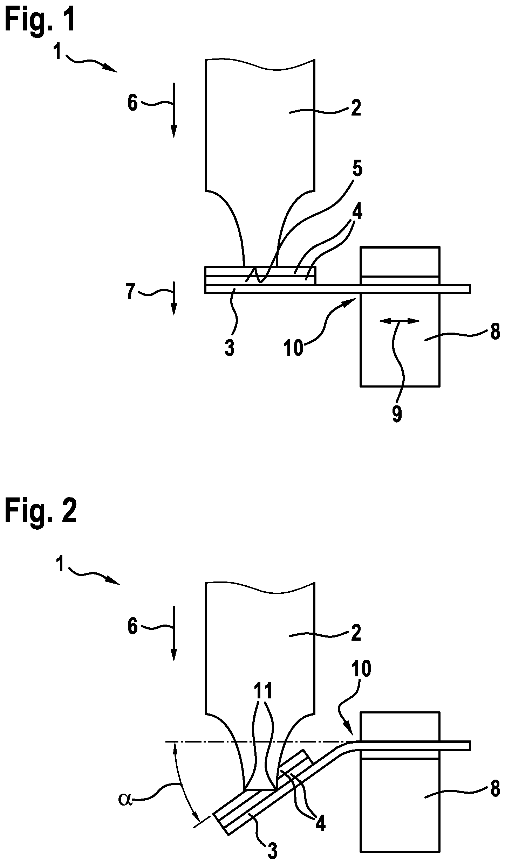

Anhand der Figuren 1 und 2 wird ein erstes Ausführungsbeispiel einer Vorrichtung 1 zum Ultraschallfügen und -trennen von siegelbarem Material 4 beschrieben.

Die Vorrichtung 1 umfasst eine Sonotrode 2, die in Ultraschallschwingung versetzt wird. Der Sonotrode 2 liegt ein Gegenwerkzeug 3, ausgebildet als einseitig eingespanntes Blech, gegenüber. Zwischen der Sonotrode 2 und dem Gegenwerkzeug 3 sind zwei Lagen eines siegelbaren Materials 4 angeordnet.

An der Sonotrode 2 ist eine Siegelfläche 5 ausgebildet. Die Siegelfläche 5 liegt, in der in Figur 1 gezeigten Grundposition, parallel zum Gegenwerkzeug 3.

Des Weiteren umfasst die Vorrichtung 1 eine Einspannvorrichtung 8. In der Einspannvorrichtung 8 ist das Gegenwerkzeug 3 einseitig eingespannt. Aufgrund der relativ dünnen Ausbildung des Gegenwerkzeugs 3 weist das Gegenwerkzeug 3 eine integrale elastische Aufhängung 10 auf. Das Gegenwerkzeug 3 ist also elastisch ausgebildet und kann bezüglich der Einspannvorrichtung 8 geneigt werden.

Figur 1 zeigt eine Grundposition der Vorrichtung 1. Figur 2 zeigt die Vorrichtung 1 nach dem Versiegeln bzw. Fügen und am Ende des Trennprozesses. In dem Füge- und Trennprozess, von Figur 1 zu Figur 2, wird die Sonotrode 2 entlang einer Sonotrodenbewegungsrichtung 6 in Richtung des Gegenwerkzeugs 3 zugestellt. Dadurch führt das Gegenwerkzeug 3 eine Gegenwerkzeugbewegung 7 aus. Somit kommt es zur Neigung des Gegenwerkzeugs 3 um einen Winkel α.

Aufgrund der Neigung um den Winkel α wirkt in erster Linie eine der Kanten 11 der Siegelfläche 5 auf das Material 4. Gleichzeitig hat die Neigung um den Winkel α zur Folge, dass die Ultraschallschwingung von der Sonotrode 2 auf das Material 4 und auf das Gegenwerkzeug 3, im Gegensatz zur Grundposition, winkelversetzt wirkt. Dadurch kommt es zur Scherbelastung und somit zur Durchtrennung des Materials 4.

Zwischen dem Gegenwerkzeug 3 und der Einspannvorrichtung 8 ist eine Einstellbewegung 9 möglich. Durch die Einstellbewegung 9 wird der überstehende, freie Anteil des Gegenwerkzeugs 3 verändert. Dadurch verändert sich die durch die elastische Aufhängung 10 erzeugte Rückstellkraft.

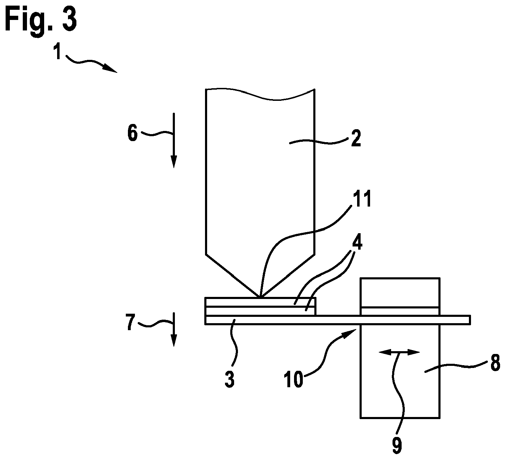

Figur 3 zeigt ein zweites Ausführungsbeispiel der Vorrichtung 1. Gleiche bzw. funktional gleiche Bauteile sind in allen Ausführungsbeispielen mit denselben Bezugszeichen versehen. Im zweiten Ausführungsbeispiel ist an der Sonotrode 2 keine Siegelfläche 5 vorgesehen. Das dem Gegenwerkzeug 3 zugewandte Ende der Sonotrode 2 ist hier lediglich eine Kante 11. Dadurch sind ein symmetrisches Trennen und symmetrische Siegelflächen am Material 4 möglich.

Mit Hilfe der Sonotrodenbewegung 6 wird das Gegenwerkzeug 3 definiert elastisch verformt und somit der notwendige Fügedruck (auch: Siegeldruck) erzeugt. Die sich dabei überlagernden longitudinalen und transversalen Ultraschallschwingungen ermöglichen einen Füge- und Trennvorgang in einem Prozessschritt. Im ersten Ausführungsbeispiel wird eine breite und damit feste und dichte Siegelnaht ausgeführt. Die Sonotrode 2 siegelt zuerst großflächig das Material 4 und trennt dann mittels einer Kante 11 im Abschluss der Sonotrodenbewegung 6 das Material durch.

Im zweiten Ausführungsbeispiel hat die Sonotrode 2 nur eine spitz zulaufende Kante 11. Bei der zweiten Ausführungsform ist es möglich, eine Trennnaht auszuführen, wobei beide Trennflächen die gleiche Nahtgeometrie aufweisen.

Die für den Füge- und Trennvorgang notwendige Kraft ist in beiden Ausführungsbeispielen sehr gering und kann über die Einstellbewegung 9 justiert werden.

Das Gegenwerkzeug 3 wird durch die Ultraschallschwingung der Sonotrode 2 in Schwingung versetzt. Diese Schwingungen regen das Gegenwerkzeug 3 zu einer phasen- und frequenzverschobenen Gegenschwingung an. Diese Gegenschwingung hat wesentliche Vorteile beim Fügen und Trennen. Es bedarf keiner Spalteinstellung und durch die geringe Masse des Gegenwerkzeugs 3 kommt es zu keiner Rückkoppelung, die zur Zerstörung des Schwinggebildes führen würde.

## Patentansprüche

1. Vorrichtung (1) zum Ultraschallfügen und -trennen von siegelbarem Material (4), umfassend:
- eine in Ultraschallschwingung versetzbare Sonotrode (2), und
- ein Gegenwerkzeug (3),
- eine Bewegungsvorrichtung zum Verfahren der Sonotrode (2), und
- eine elastische Aufhängung (10) zur beweglichen Befestigung des Gegenwerkzeugs (3),
- wobei zwischen der Sonotrode (2) und dem Gegenwerkzeug (3) das siegelbare Material (4) versiegelbar und trennbar ist, und
- wobei bei einem Verfahren der Sonotrode (2) gegen das Gegenwerkzeug (3), das Gegenwerkzeug (3) gegen eine Rückstellkraft der elastischen Aufhängung (10) bewegbar ist,
**dadurch gekennzeichnet, dass**
- das Gegenwerkzeug (3) als einseitig eingespannte, elastische Platte, vorzugsweise als einseitig eingespanntes Blech, ausgebildet ist.

2. Vorrichtung nach Anspruch 1, **dadurch gekennzeichnet, dass** die elastische Aufhängung (10) dazu ausgebildet ist, dass bei dem Verfahren der Sonotrode (2) gegen das Gegenwerkzeug (3), das Gegenwerkzeug (3) gegenüber einer Grundposition neigbar ist.

3. Vorrichtung nach Anspruch 2, **dadurch gekennzeichnet, dass** das Gegenwerkzeug (39) um zumindest 10° gegenüber der Grundposition neigbar ist.

4. Vorrichtung nach einem der vorhergehenden Ansprüche, **dadurch gekennzeichnet, dass** das Gegenwerkzeug (3) als von der Sonotrode (2) anregbares, schwingendes Element ausgebildet ist.

5. Vorrichtung nach einem der vorhergehenden Ansprüche, **gekennzeichnet durch** eine Einspannvorrichtung (8) zum Einspannen des Gegenwerkzeugs (3), wobei das Gegenwerkzeug (3) in der Einspannvorrichtung (8) zum Einstellen der Rückstellkraft an verschiedenen Positionen einspannbar ist.

6. Verfahren zum Fügen und Trennen von siegelbarem Material (4), umfassend die folgenden Schritte:
- Einsetzen eine siegelbaren Materials (4) zwischen eine Sonotrode (2) und ein Gegenwerkzeug (3),
- Versetzen der Sonotrode (2) in Ultraschallschwingung, und
- Verfahren der Sonotrode (2) in Richtung des Gegenwerkzeugs (3) zum Bewegen des Gegenwerkzeugs (3) gegen eine Rückstellkraft einer elastischen Aufhängung (10) des Gegenwerkzeugs (3) zum Fügen und Trennen des siegelbaren Materials (4),
**dadurch gekennzeichnet, dass**
- das Gegenwerkzeug (3) durch das Verfahren der Sonotrode (2) gegenüber einer Grundposition geneigt wird, sodass die Ultraschallschwingung von der Sonotrode (2) auf das siegelbare Material (4) und auf das Gegenwerkzeug (3) bezüglich der Grundposition winkelversetzt wirkt.

7. Verfahren nach Anspruch 6, **dadurch gekennzeichnet, dass** die Trennung des siegelbaren Materials (4) lediglich durch eine ausreichende Rückstellkraft des Gegenwerkzeugs (3) und eine ausreichende Ultraschallschwingung erfolgt.

## Claims

1. Apparatus (1) for ultrasound joining and separating of sealable material (4), comprising:
- a sonotrode (2), which can be set into a state of ultrasonic vibration, and
- a counter tool (3),
- a moving device for moving the sonotrode (2), and
- a resilient suspension (10) for movable attachment of the counter tool (3),
- the sealable material (4) being sealable and separable between the sonotrode (2) and the counter tool (3), and
- during moving of the sonotrode (2) against the counter tool (3), the counter tool (3) being movable against a restoring force of the resilient suspension (10),
**characterized in that**
- the counter tool (3) is designed as a flexible plate that is clamped at one end, preferably as a metal sheet that is clamped at one end.

2. Apparatus according to Claim 1, **characterized in that** the resilient suspension (10) is designed such that, during moving of the sonotrode (2) against the counter tool (3), the counter tool (3) can be inclined with respect to a base position.

3. Apparatus according to Claim 2, **characterized in that** the counter tool (39) can be inclined with respect to the base position by at least 10°.

4. Apparatus according to one of the preceding claims, **characterized in that** the counter tool (3) is designed as a vibrating element that can be excited by the sonotrode (2).

5. Apparatus according to one of the preceding claims, **characterized by** a clamping device (8) for clamping the counter tool (3), the counter tool (3) being able to be clamped in the clamping device (8) for setting the restoring force at various positions.

6. Method for joining and separating sealable material (4), comprising the following steps:
- inserting a sealable material (4) between a sonotrode (2) and a counter tool (3),
- setting the sonotrode (2) into a state of ultrasonic vibration, and
- moving the sonotrode (2) in the direction of the counter tool (3) to move the counter tool (3) against a restoring force of a resilient suspension (10) of the counter tool (3) for joining and separating the sealable material (4),
**characterized in that**
- the moving of the sonotrode (2) has the effect that the counter tool (3) is inclined with respect to a base position, so that the ultrasonic vibration of the sonotrode (2) acts on the sealable material (4) and on the counter tool (3) with an angular offset with respect to the base position.

7. Method according to Claim 6, **characterized in that** the separation of the sealable material (4) only takes place when there is a sufficient restoring force of the counter tool (3) and a sufficient ultrasonic vibration.

## Revendications

1. Dispositif (1) pour l'assemblage et la séparation aux ultrasons de matériau soudable (4), comprenant:
- une sonotrode (2) pouvant être mise en vibration ultrasonore, et
- un outil opposé (3),
- un dispositif de mouvement pour le déplacement de la sonotrode (2), et
- une suspension élastique (10) pour la fixation mobile de l'outil opposé (3),
- dans lequel le matériau soudable (4) est soudable et séparable entre la sonotrode (2) et l'outil opposé (3), et
- dans lequel, lors d'un déplacement de la sonotrode (2) contre l'outil opposé (3), l'outil opposé (3) est déplaçable contre une force de rappel de la suspension élastique (10),
**caractérisé en ce que**
- l'outil opposé (3) est réalisé sous la forme d'une plaque élastique, serrée d'un seul côté, de préférence une tôle serrée d'un seul côté.

2. Dispositif selon la revendication 1, **caractérisé en ce que** la suspension élastique (10) est conçue de telle manière que, lors d'un déplacement de la sonotrode (2) contre l'outil opposé (3), l'outil opposé (3) soit inclinable par rapport à une position de base.

3. Dispositif selon la revendication 2, **caractérisé en ce que** l'outil opposé (39) est inclinable d'au moins 10° par rapport à la position de base.

4. Dispositif selon l'une quelconque des revendications précédentes, **caractérisé en ce que** l'outil opposé (3) est réalisé sous la forme d'un élément vibrant excitable par la sonotrode (2).

5. Dispositif selon l'une quelconque des revendications précédentes, **caractérisé par** un dispositif de serrage (8) pour le serrage de l'outil opposé (3), dans lequel l'outil opposé (3) peut être serré à différentes positions dans le dispositif de serrage (8) pour le réglage de la force de rappel.

6. Procédé pour l'assemblage et la séparation de matériau soudable (4), comprenant les étapes suivantes:
- introduire un matériau soudable (4) entre une sonotrode (2) et un outil opposé (3),
- mettre la sonotrode (2) en vibration ultrasonore, et
- déplacer la sonotrode (2) en direction de l'outil opposé (3) pour le déplacement de l'outil opposé (3) contre une force de rappel d'une suspension élastique (10) de l'outil opposé (3) afin d'assembler et de séparer le matériau soudable (4),
**caractérisé en ce que**
- par le déplacement de la sonotrode (2) on incline l'outil opposé (3) par rapport à une position de base, de telle manière que la vibration ultrasonore de la sonotrode (2) agisse sur le matériau soudable (4) et sur l'outil opposé (3) avec un décalage angulaire par rapport à la position de base.

7. Procédé selon la revendication 6, **caractérisé en ce que** la séparation du matériau soudable (4) se produit uniquement par une force de rappel suffisante de l'outil opposé (3) et une vibration ultrasonore suffisante.
